# FASCICULE DE BREVET EUROPEEN

(11) **EP 0 592 335 B1**
(45) Date de publication et mention de la délivrance du brevet: **11.12.1996**
(21) Numéro de dépôt: 93420387.8
(22) Date de dépôt: 28.09.1993
(51) Int. Cl.: G07F 15/00, G07F 7/00

(54) **Dispositif autonome de délivrance en libre service d'énergie électrique**
Selbstbedienungsvorrichtung zur Abgabe elektrischer Energie
Independent self-service device for delivering electrical power

(30) Priorité: 06.10.1992 FR 9212257
(43) Date de publication de la demande: 13.04.1994
(73) Titulaire: ELECTRICITE DE FRANCE, F-75008 Paris (FR)
(72) Inventeur: Duval, Catherine, F-69100 Villeurbanne (FR); Laenen, Georges, F-69006 Lyon (FR); Le Grevellec, Florence, F-69005 Lyon (FR); Riberolles, Jean-Louis, F-69300 Caluire (FR)
(74) Mandataire: Laurent, Michel

(56) Documents cités:
- EP-A- 0 375 468
- EP-A- 0 479 290
- US-A- 4 312 436
- US-A- 4 532 418

## Description

L'invention concerne un nouveau dispositif, susceptible de permettre la délivrance et la fourniture d'énergie électrique et ce, en libre service. Elle concerne un tel dispositif tout particulièrement destiné à un usage hors habitation, notamment sur les lieux publics, et pour des applications extra-domestiques.

De nombreux usagers, notamment mais non exclusivement de la route, sont demandeurs d'énergie électrique, afin, lors de leurs haltes successives, soit de conserver la qualité de la cargaison qu'ils transportent, soit de jouir d'un minimum de confort, soit encore de disposer d'une source d'énergie propre à leur permettre d'assurer leur activité quotidienne.

Ainsi en est-il des transporteurs routiers notamment frigorifiques, qui sont régulièrement tenus de s'arrêter, et qui pour conserver toute la fraîcheur aux denrées périssables qu'ils transportent, doivent activer un moteur thermique, indépendant du moteur de propulsion du camion proprement dit, et nécessaire pour assurer le fonctionnement du groupe frigorifique embarqué chargé du maintien à basse température de la remorque isotherme contenant lesdites denrées. Ces moteurs thermiques, généralement moteurs diesel, génèrent outre une pollution de l'air ambiant, également une nuisance inhérente au bruit.

Or à ce jour, ce type de camion dispose quasi systématiquement d'un moteur électrique, susceptible d'assurer le fonctionnement du groupe frigorifique embarqué. Or, il n'existe pas à ce jour, sauf au niveau d'entreprises publiques, de système d'alimentation électrique autonome, notamment dans les aires de repos, de stationnement, etc...., susceptible de permettre l'alimentation de ces moteurs électriques.

Mais ce problème concerne également tant les adeptes de camping, caravaning que ceux du nautisme, qui lorsqu'ils gagnent un emplacement respectivement dans un camping ou un anneau dans un port, sont soumis au paiement d'une somme forfaitaire, afin de pouvoir disposer d'une prise électrique, somme forfaitaire indépendante de la quantité effective d'électricité consommée.

Ce problème se pose également pour les forains et autres activités connexes, et également aux permissionnaires de marché (maraîchers, etc.), qui sont également le plus souvent soumis au versement d'une indemnité forfaitaire pour pouvoir disposer d'électricité, afin de faire fonctionner leurs manèges et autres stands, ou systèmes de chauffage et/ou d'éclairage.

Enfin, le parc de véhicules automobiles à moteur électrique ne faisant que s'étendre, un besoin commence à se faire sentir d'un dispositif apte à permettre la recharge des batteries ou accumulateurs embarqués dans lesdits véhicules, et destinés à permettre l'alimentation en énergie électrique du moteur.

De la sorte, un réel besoin est apparu, concernant la possibilité de pouvoir disposer, notamment au niveau de lieux publics, aires de repos, aires de stationnement, campings, ports, etc..., bref de manière extra-domestique, de systèmes susceptibles de permettre la délivrance à la demande et sans intermédiaire d'énergie électrique.

Afin de satisfaire cette demande, on a proposé un distributeur d'énergie électrique, se présentant sous la forme de bornes de délivrance d'électricité, intégrant un organe de pré-paiement, tel que par exemple décrit dans le document US-A-4 532 418. Chacune des bornes intègre un compteur électrique, de sorte qu'il n'y a pas disjonction entre centre de paiement et centre de délivrance de l'électricité. Ce type de distributeur présente de fait l'inconvénient rédhibitoire d'être facilement fraudable, puisqu'il suffit à l'utilisateur de se connecter en amont du compteur pour pouvoir s'approvisionner en électricité.

Afin de s'affranchir de cet inconvénient, on a alors proposé de disjoindre le centre de paiement du centre de délivrance de l'électricité, comme par exemple dans le document EP-A-0 375 468. Le dispositif décrit comprend des bornes de délivrance d'énergie électrique, et une unité de vente de jetons ou systèmes équivalents, susceptibles d'être introduits au niveau desdites bornes afin d'induire la délivrance effective d'électricité. Cependant, lesdites bornes sont en permanence sous tension, de sorte qu'une nouvelle fois, la fraude est possible, puisque les bornes ne demeurent jamais sous le contrôle de l'unité de vente de jetons.

Dans un perfectionnement de cette installation, on a alors proposé, par exemple dans le document EP-A-0 479 290, de ne mettre les bornes sous tension, qu'après paiement effective de la somme dûe, celle-ci étant fonction de la quantité d'énergie électrique souhaitée. Cependant, pour ce faire, il est nécessaire d'installer en amont de chacune des bornes, un compteur apte à déterminer la quantité d'énergie électrique effectivement consommée.

L'objet de l'invention est de proposer un dispositif anti-fraude et anti-vandalisme permettant de disposer de manière extra-domestique, de systèmes susceptibles de délivrer à la demande et sans intermédiaire de l'énergie électrique.

Le dispositif autonome de délivrance d'énergie électrique en libre service conforme à l'invention, comprend :
- une pluralité de bornes de distribution, au niveau desquelles est susceptible d'être branché tout appareil consommateur ou récepteur d'électricité ;
- une unité centrale de gestion, indépendante desdites bornes, intégrée au sein d'un kiosque de gestion, ladite unité centrale de gestion étant apte à gérer d'une part, la distribution d'électricité au niveau de chacune des bornes pour une durée déterminée à partir du secteur d'alimentation électrique, et d'autre part, l'intéraction entre un organe de pré-paiement et les utilisateurs potentiels de ces bornes, la connexion desdites bornes de distribution au secteur d'alimentation électrique pour leur mise sous tension étant effectuée au sein dudit kiosque de gestion, par le biais de contacteurs intégrés dans celui-ci, après opération effective de paiement.

En d'autres termes, l'invention concerne un dispositif autonome, du type intéractif, dans lequel l'utilisateur désireux de disposer d'électricité pour une durée déterminée, affranchit par tout moyen de paiement traditionnel une somme indiquée afin de pouvoir disposer au niveau d'une borne, notamment située en un lieu public, de la source d'électricité demandée. En outre, et pour résoudre les problèmes liés au vandalisme et à la fraude, l'invention consiste à prévoir une pluralité de bornes de délivrance d'électricité proprement dites, et une unité centrale de gestion, indépendante physiquement desdites bornes, mais gérant en direct et en instantané la connexion desdites bornes au secteur d'alimentation électrique. Ainsi, en l'absence de l'aval donné par l'unité centrale, les bornes de délivrance ne sont jamais sous tension, de sorte que quelles que soient les tentatives de connexion frauduleuse au niveau desdites bornes, celles-ci demeurent vaines, puisque celles-ci ne reçoivent pas de courant électrique.

Selon une autre caractéristique de l'invention, l'organe de paiement est associé à un clavier et à un écran au sein d'un terminal de transaction, également connectés à l'unité centrale de gestion, et destinés à permettre dans le cadre de l'intéractivité de l'invention, à l'utilisateur de sélectionner la durée de fourniture, et corrélativement à visualiser le dialogue intéractif avec l'unité de gestion.

Dans une première forme de réalisation de l'invention, l'organe de paiement est constitué par un lecteur de cartes bancaires, associé à un modulateur démodulateur, lui-même relié au réseau téléphonique commuté ou réseau numérique à intégration de service (RNIS) pour la connection au centre de télécollecte de la banque considérée.

Dans une autre forme de réalisation de l'invention, cet organe de paiement est constitué par un lecteur de cartes de paiement, du type carte magnétique, carte à puce ou clef à puce, dont le capital est décrémenté à chaque opération, par le biais de l'unité centrale de gestion, en fonction de la durée de fourniture d'électricité demandée. De telles cartes sont alors commercialisées par la société distributrice d'électricité.

Il peut être également conçu dans le cadre de l'invention que l'organe de paiement est constitué par un monnayeur associé à un lecteur de billets, qui, en liaison avec l'unité de gestion, analyse et mesure la quantité effective du montant acquitté avant de procéder à la délivrance d'électricité.

Selon l'invention, ce dispositif comprend un coffret au niveau duquel aboutit le secteur d'alimentation électrique, et à partir duquel partent les différentes connexions aux bornes, le coffret comportant en outre pour chacune des liaisons vers les bornes un contacteur et un disjoncteur, ledit contacteur étant géré par l'unité de gestion.

En outre, et conformément à l'invention, la porte du coffret est verrouillée en cas de non utilisation, mais est susceptible d'être ouverte par déverrouillage sous le contrôle de l'unité de gestion en cas de défaut, notamment d'isolation, de l'installation, consécutivement à la transaction ; sa fermeture est induite par l'unité centrale de gestion dès le réenclenchement du disjoncteur concerné par la fin de la transaction. Dans ce cas, le réenclenchement du disjoncteur s'effectue manuellement par l'utilisateur. Dans une forme évoluée de l'invention, l'unité de gestion procède directement au réenclechement automatique du disjoncteur, dès lors que le défaut d'isolation a disparu.

Dans une autre forme de réalisation, chaque borne est munie de son coffret indépendant et également de son propre disjoncteur.

La manière dont l'invention peut être réalisée et les avantages qui en découlent ressortiront mieux de l'exemple de réalisation qui suit donné à titre indicatif et non limitatif à l'appui des figures annexées.

La figure 1 est une représentation schématique simplifiée du fonctionnement de l'installation conforme à l'invention.

La figure 2 est une représentation schématique également simplifiée du synoptique du kiosque de gestion de l'installation conforme à l'invention.

Bien que plus particulièrement décrite en liaison avec la distribution libre service d'électricité au niveau d'aires de repos, de stationnement, et à destination de transporteurs frigorifiques, il est bien entendu que l'invention ne saurait se limiter à cette seule application.

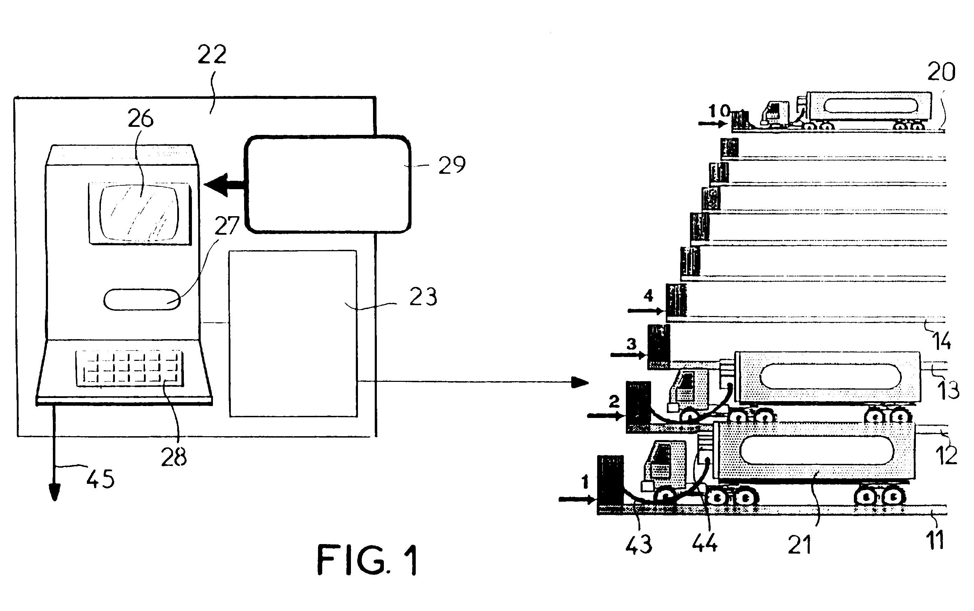

On a représenté schématiquement au sein de la figure 1, le principe d'une telle distribution. On munit une aire de stationnement de différents emplacements référencés (11 à 20), destinés à recevoir chacun un camion frigorifique. De manière connue, chacun de ces camions (21) est muni d'un groupe frigorifique (44), susceptible de fonctionner au moyen d'un moteur diesel, notamment lorsque le camion circule, mais également par un moteur électrique. Dans ce cas, on relie le moteur électrique dudit groupe par le biais d'un cordon (43), que l'on branche sur l'une des bornes référencées (1) à (10), chaque emplacement (11 - 20) recevant une seule borne.

Selon l'invention, chacune de ces bornes est destinée à délivrer de l'électricité pendant une durée déterminée. Pour ce faire, l'utilisateur potentiel accède à un kiosque de gestion (22), destiné à permettre d'une part, le choix de la durée de fourniture d'électricité voulue, et d'autre part, d'effectuer le paiement correspondant.

Ce kiosque (22) comprend fondamentalement un terminal de transaction (24), muni :
- d'un clavier (28), destiné à permettre à l'utilisateur d'introduire des réponses dans le cadre d'un dialogue interactif avec ledit terminal; ce clavier est avantageusement à touches sensitives anti-vandalisme ;
- d'un écran de visualisation (26), destiné à permettre audit utilisateur d'interagir avec ledit terminal (24) ;
- et enfin, d'un organe de pré-paiement (27).

Ce terminal de transaction (24) est géré par une unité de gestion (30), qui elle-même, en fonction des données qu'elle stocke, préalablement introduites avant la mise en place de l'installation, ou introduites par l'utilisateur par le biais du clavier (28), assure la connexion d'une ou de plusieurs bornes (1 - 10), dont l'activation physique et les connexions sont intégrées dans un coffret (23).

Selon une forme particulièrement avantageuse de l'invention, l'organe de paiement (27) est constitué par un lecteur de cartes bancaires (29) d'un type en soi connu. Pour ce faire, le terminal de transaction (24) est connecté au réseau téléphonique commuté (45), ou au réseau numérique à intégration de service.

Ainsi, dans cette forme de réalisation particulière, la première étape consiste en l'introduction de la carte (29) dans le lecteur (27), qui une fois sa détection réalisée, induit la visualisation sur l'écran (26) du démarrage de l'intéraction. Celui-ci peut avantageusement commencer par la sélection d'une langue, notamment parmi le français, l'anglais, l'allemand, l'espagnol et l'italien, étant bien entendu que le nombre de langues n'est en aucun cas limité. En outre, après avoir vérifié la validité de la carte, l'intéraction continue par la saisie du code confidentiel par le biais du clavier (28), lorsque la dite carte (29) est une carte à puce. Dans le cas d'une carte à piste magnétique, cette étape peut constituer en un retrait de la carte, qui de manière connue induit une meilleure lecture de celle-ci.

Il peut être alors procédé à la phase préparatoire à la fourniture d'énergie électrique. Celle-ci commence par l'indication du numéro de la borne (1 à 10) à alimenter, puis l'indication tarifaire de la fourniture sous la forme d'une durée d'usage, indications visualisées sur l'écran (26).

Après sélection de la durée d'utilisation, l'affichage du coût de la fourniture s'effectue toujours au niveau de l'écran (26), et après acceptation de l'offre par l'utilisateur, notamment par l'appui sur l'une quelconque des touches du clavier (28), le terminal de transaction (24) enregistre la transaction bancaire, incluant le montant de la transaction à réaliser, et imprimant avantageusement un ticket de transaction. Pour ce faire, le terminal (24) est muni d'une imprimante thermique (non représentée) reliée à l'unité centrale, et munie d'un système de découpe papier. Corrélativement, la borne désignée est mise sous tension au moyen de connexions aboutissant à un bornier (36), sa mise hors service s'effectuant automatiquement à l'expiration de la durée allouée.

Le compte de l'utilisateur est débité via le terminal (24), et le réseau téléphonique (45).

Dans une autre forme de réalisation de l'invention, l'organe de paiement (27) est constitué par un lecteur de cartes ou de clefs de paiement, chacune des cartes ou clefs étant à l'instar des cartes téléphoniques pourvue d'un capital, décrémenté en fonction, comme dans le cas précédent, de la durée d'utilisation desdites bornes. Le principe de fonctionnement reste entièrement identique. Ces cartes sont commercialisées dans tout commerce, notamment bureaux de tabacs.

Dans une autre forme de réalisation, il peut également être envisagé un monnayeur traditionnel couplé avec un lecteur de billets du type LANDIS GYR. Ce monnayeur électronique est destiné de manière connue à détecter et identifier les pièces de monnaie ainsi que les billets de banque introduits, transmettant ces informations à l'unité de gestion (30), qui décompte alors les sommes effectivement versées et engage, lorsque le compte est bon, le processus d'offre intéractif identique à celui précédemment décrit.

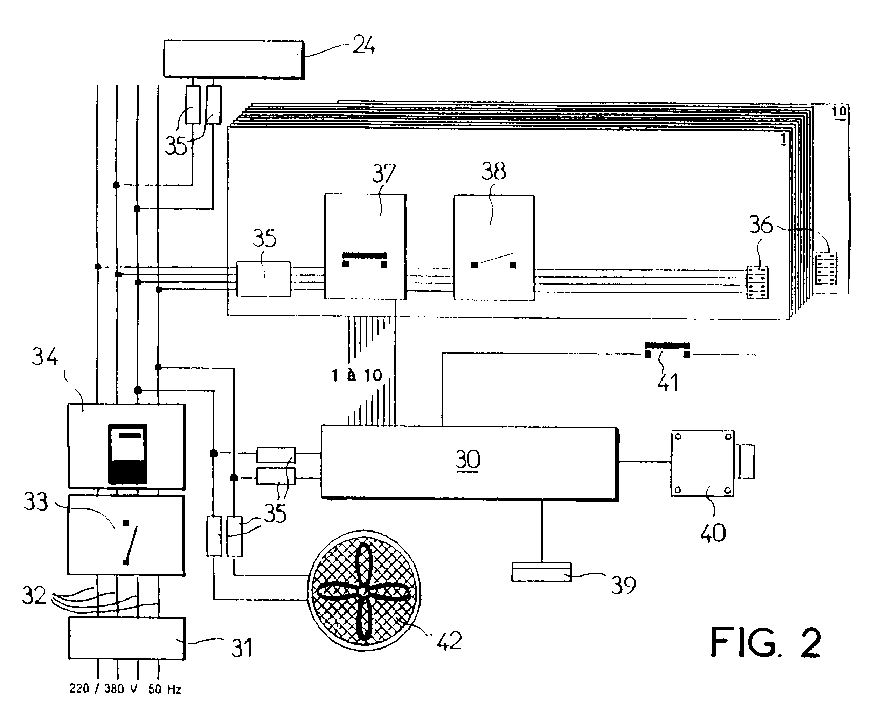

Le terminal de transaction (24) est donc géré par l'unité de gestion (30), qui en outre assure la gestion de la distribution d'électricité. En se reportant à la figure 2, on observe que le terminal de transaction (24) et l'unité de gestion (30) sont alimentés à partir du secteur d'alimentation électrique (32), triphasé 220V/380V en 50 Herz . Celui-ci comporte à l'issue d'un bornier (31), et ce de manière traditionnelle un sectionneur (33) ainsi qu'un compteur (34), permettant ainsi de décompter la quantité d'électricité effectivement utilisée par l'ensemble du dispositif de délivrance d'électricité.

L'unité de gestion (30), typiquement constituée d'une carte de traitement type micro-ordinateur, gère le dialogue avec le terminal de transaction (24), et contrôle également le fonctionnement du coffret (23).

Celui-ci comporte d'une part, les fusibles d'arrivée (35), dix départs en triphasé typiquement à 32 Ampères, un contacteur (37) et un disjoncteur (38) pour chacune des bornes (1 - 10).

Ce coffret (23) intégré au niveau du kiosque de gestion (22), est accessible par le biais d'une porte, dont la gâche (40) est également gérée par l'unité de gestion (30). Ainsi, dès lors que la transaction est validée, l'unité de gestion (30) induit le désenclenchement de la gâche de la porte (40), permettant ainsi à l'utilisateur de procéder au réenclenchement du disjoncteur de la borne considérée, au cas ou celui-ci viendrait à sauter, par exemple pour un défaut d'isolation. En outre, la délivrance effective d'électricité au niveau de chacune des bornes ne peut s'effectuer que lorsque la porte dudit coffre (23) est fermée, ce dont on s'assure par le biais d'un contrôle de fermeture des portes (41), également relié à l'unité de gestion (30).

Dans une variante de l'invention, chacune des bornes (1 - 10) comporte son propre coffret, intégrant le disjoncteur concerné.

On a également sur la figure 2, le schéma simplifié du synoptique du kiosque (22) de l'invention. On a ainsi représenté par la référence (39) une interface type RS 232, destinée à permettre le raccordement de l'unité de gestion (30) sur le réseau téléphonique commuté ou sur un réseau numérique à intégration de service. Comme déjà précisé, ce raccordement permet d'assurer le fonctionnement de lecteur de cartes bancaires. En outre, ce raccordement est également destiné à permettre d'effectuer une télémaintenance du dispositif de l'invention, facilitant de la sorte la gestion de telles installations.

Enfin, et traditionnellement, cette installation comporte un ventilateur (42), destiné à permettre la ventilation de l'enceinte du circuit électrique.

On conçoit ainsi qu'avec le dispositif conforme à l'invention, il est possible de disposer d'une installation de délivrance d'électricité autonome, en libre service, et dont le fonctionnement est particulièrement simple et conviviale de telle sorte à encourager leur utilisation.

Outre l'avantage évident de telles installations dans le cadre des transporteurs frigorifiques, à savoir notamment la diminution de la pollution atmosphérique et des nuisances générées par le bruit des moteurs thermiques , un tel dispositif s'avère également d'un grand intérêt dès lors que l'on souhaite disposer d'une source d'alimentation électrique en des lieux publics.

Parallèlement, ce dispositif autonome présente de nombreuses autres applications, notamment au niveau des ports de plaisance, ports de commerce, pour les permissionnaires de marché, pour les autocars de tourisme (fonctionnement de la climatisation), mais également pour les adeptes du camping-caravaning.

Enfin, il trouve tout naturellement son application pour le rechargement des batteries/accumulateurs des véhicules à moteurs électriques.

## Revendications

1. Dispositif autonome de délivrance d'énergie électrique en libre service comprenant :
- une pluralité de bornes de distribution (1-10), au niveau desquelles est susceptible d'être branché tout appareil consommateur ou récepteur d'électricité ;
- une unité centrale de gestion (30), indépendante desdites bornes (1-10), intégrée au sein d'un kiosque de gestion (22), ladite unité centrale étant apte à gérer:
. d'une part, l'interaction entre un organe de pré-paiement (27) et les utilisateurs potentiels desdites bornes,
. et d'autre part, la distribution d'électricité au niveau de chacune des bornes (1-10) à partir du secteur d'alimentation électrique (31) pour une durée déterminée par le biais de contacteurs (37) intégrés au sein dudit kiosque (22), de telle sorte que la connexion d'une ou plusieurs bornes de distribution (1 - 10) au secteur d'alimentation électrique pour sa ou leur mise sous tension soit effectuée au sein dudit kiosque (22) après opération effective de paiement.

2. Dispositif selon la revendication 1, ***caractérisé*** en ce que l'organe de pré-paiement (27) est associé à un clavier (28) et à un écran (26) au sein d'un terminal de transaction (24), également connectés à l'unité centrale de gestion (30), et destinés à permettre à l'utilisateur de sélectionner la durée de fourniture et corrélativement à visualiser le dialogue intéractif avec l'unité de gestion.

3. Dispositif selon l'une des revendications 1 et 2, ***caractérisé*** en ce que l'organe de pré-paiement (27) est constitué par un lecteur de cartes bancaires, associé à un modulateur-démodulateur, lui-même relié au réseau téléphonique commuté (45) ou réseau numérique à interrogation de service afin d'assurer la connection avec le centre de télécollecte de la banque considérée.

4. Dispositif selon l'une des revendications 1 et 2, ***caract*é*risé*** *en* ce que l'organe de pré-paiement (27) est constitué par un lecteur de cartes de paiement, du type carte magnétique ou carte à puce, dont le capital est décrémenté à chaque opération, par le biais de l'unité centrale de gestion (30), en fonction de la durée de fourniture d'électricité demandée.

5. Dispositif selon l'une des revendications 1 et 2, ***caract*é*risé*** en ce que l'organe de pré-paiement (27) est constitué par un monnayeur associé à un lecteur de billets, qui, en liaison avec l'unité de gestion (30), analyse et mesure la quantité effective du montant acquitté avant de procéder à la délivrance d'électricité.

6. Dispositif selon l'une des revendications 1 à 5, ***caractérisé*** en ce qu'il comprend en outre un coffret verrouillable (23) intégré dans le kiosque de gestion (22), et au niveau duquel aboutit le secteur d'alimentation électrique (31), et à partir duquel partent les différentes connexions aux bornes (1-10), ledit coffret (23) comportant pour chacune des liaisons vers les bornes un contacteur (37), dont l'activation est gérée par l'unité centrale de gestion (30), et un disjoncteur (38).

7. Dispositif selon la revendication 6, ***caractérisé*** en ce que la porte d'obturation du coffret (23) est verrouillée en cas de non délivrance d'électricité à l'une quelconque des bornes (1-10), et est déverrouillée sous le contrôle de l'unité de gestion (30) consécutivement à une transaction, son reverrouillage étant induit par l'unité de gestion (30) à l'issue de la transaction.

8. Dispositif selon l'une des revendications 1 à 5, ***caractérisé*** en ce que chaque borne (1-10) est munie de son coffret indépendant, ce dernier intégrant outre un contacteur indépendant, dont la fermeture ou l'ouverture sont sous le contrôle de l'unité de gestion (30), également son propre disjoncteur.

9. Dispositif autonome de délivrance d'énergie électrique en libre service pour des transporteurs, notamment par camions frigorifiques au niveau de zones de stationnement ou d'aires de repos, comprenant :
- une pluralité de bornes de distribution (1-10), au niveau desquelles est susceptible d'être branché le groupe frigorifique (44) des dits camions;
- un kiosque de gestion (22) comprenant un terminal de transaction (24) intégrant :
. une unité centrale de gestion (30), apte à gérer :
◆ d'une part, l'interaction entre un organe de pré-paiement (27) et les utilisateurs potentiels desdites bornes, ledit organe de pré-paiement (27) étant constitué par un lecteur de cartes bancaires, associé à un modulateur-démodulateur, lui-même relié au réseau téléphonique commuté (45) ou réseau numérique à integration de service afin d'assurer la connexion avec le centre de télécollecte de la banque considérée,
◆ et d'autre part, la distribution d'électricité au niveau de chacune des bornes (1-10) à partir du secteur d'alimentation électrique (31) pour une durée déterminée par le biais de contacteurs (37) intégrés du sein dudit kiosque (22), de telle sorte que la connexion d'une ou plusieurs bornes de distribution (1 - 10) au secteur d'alimentation électrique pour sa ou leur mise sous tension soit effectuée au sein dudit kiosque (22) après opération effective de paiement,
. un clavier (28), connecté à l'unité centrale de gestion (30), destiné à permettre à l'utilisateur d'introduire des données relatives à l'opération de fourniture d'électricité et corrélativement relative au paiement de cette prestation ;
. un écran (27), relié à l'unité centrale de gestion (30), et destiné à permettre la visualisation de l'interaction entre l'utilisateur et ladite unité centrale.

## Patentansprüche

1. In sich abgeschlossene Vorrichtung zur Abgabe elektrischer Energie im Selbstbedienungsbetrieb, mit:
- einer Vielzahl von Zapfanschlußklemmen (1-10), im Bereich derer jede Elektrizitätsverbrauchs- oder -aufnahmegerätschaft anschließbar ist;
- einer zentralen Steuereinheit (30), die von den Anschlußklemmen (1-10) unabhängig und innerhalb eines Steuerraumes (22) integriert ist, wobei durch die zentrale Einheit steuerbar ist:
. einerseits die Interaktion zwischen einer Vorausbezahlungseinrichtung (27) und den möglichen Benutzern der Anschlußklemmen,
. und andererseits für eine bestimmte Dauer das Zapfen der Elektrizität aus dem elektrischen Versorgungsnetz (31) im Bereich jeder der Anschlußklemmen (1-10) über den Weg von Schaltern (37), die in dem Raum (22) integriert sind, derart, daßdieVerbindung einer oder mehrerer Zapfanschlußklemmen (1-10) mit dem elektrischen Versorgungsnetz zum Unterspannungsetzen der- oder der mehreren selben nach einem wirksamen Bezahlungsvorgang innerhalb des Raumes (22) bewirkt wird.

2. Vorrichtung nach Anspruch 1, dadurch gekennzeichnet, daß die Vorausbezahlungseinrichtung (27) mit einer Tastatur (28) und einem Bildschirm (26) innerhalb eines Transaktionsterminals (24) in Verbindung steht, die ebenfalls mit der zentralen Steuereinheit (30) verbunden sind, und die dazu vorgesehen sind, dem Benutzer die Wahl der Dauer der Bereitstellung zu ermöglichen und wechselseitig den interaktiven Dialog mit der Steuereinheit sichtbar darzustellen.

3. Vorrichtung nach einem der Ansprüche 1 und 2, dadurch gekennzeichnet, daß die Vorausbezahlungseinrichtung (27) ein Bankkartenlesegerät umfaßt , das mit einem Modem in Verbindung steht, das seinerseits mit dem Handwahl-Fernsprechnetz (45) oder dem integrierten digitalen Fernmeldenetz verbunden ist, um die Verbindung mit der Ferneinzugsstelle der betreffenden Bank zu gewährleisten.

4. Vorrichtung nach einem der Ansprüche 1 und 2, dadurch gekennzeichnet, daß die Vorausbezahlungseinrichtung (27) ein Lesegerät für Zahlkarten in der Art von Magnetkarten oder Chipkarten umfaßt, deren Geldbetrag bei jedem Vorgang über die zentrale Steuereinheit (30) in Abhängigkeit der gewünschten Dauer der Elektrizitätsbereitstellung vermindert wird.

5. Vorrichtung nach einem der Ansprüche 1 und 2, dadurch gekennzeichnet, daß die Vorausbezahlungseinrichtung (27) einen Münzapparat umfaßt, der mit einem Geldscheinlesegerät in Verbindung steht, der in Verbindung mit der Steuereinheit (30) den Ist-Wert des entrichteten Betrages analysiert und mißt, bevor die Elektrizitätsabgabe erfolgt.

6. Vorrichtung nach einem der Ansprüche 1 bis 5, dadurch gekennzeichnet, daß sie außerdem einen verriegelbaren, in dem Steuerraum (22) integrierten Schaltschrank (23) umfaßt, in dessen Bereich das elektrische Versorgungsnetz (31) führt, und von dem aus die verschiedenen Verbindungen zu den Anschlußklemmen (1-10) abgehen, wobei der Schaltschrank (23) für jede der Verbindungsleitungen zu den Anschlußklemmen einen Schalter (37), dessen Aktivierung durch die zentrale Steuereinheit (30) gesteuert wird, und einen Unterbrecher (38) aufweist.

7. Vorrichtung nach Anspruch 6, dadurch gekennzeichnet, daß die Schließtür des Schaltschrankes (23) im Falle der Nichtabgabe von Elektrizität an irgendeine der Anschlußklemmen (1-10) verriegelt ist und unter Kontrolle durch die Steuereinheit (30) infolge einer Transaktion entriegelt wird, wobei das Entriegeln durch die Steuereinheit (30) nach Abschluß der Transaktion eingeleitet wird.

8. Vorrichtung nach einem der Ansprüche 1 bis 5, dadurch gekennzeichnet, daß jede Anschlußklemme (1-10) mit einem unabhängigen Schaltschrank ausgerüstet ist, wobei letzterer außer einen unabhängigen Schalter, dessen Schließen und Öffnen unter der Kontrolle der Steuereinheit (30) steht, ebenfalls einen eigenen Unterbrecher einbezieht.

9. In sich abgeschlossene Vorrichtung zur Abgabe elektrischer Energie im Selbstbedienungsbetrieb für Frachtführer insbesondere von Kühltransportfahrzeugen, im Bereich von Standzonen oder Raststätten, mit:
- einer Vielzahl von Zapfanschlußklemmen (1-10), im Bereich derer das Kühlaggregat (44) der Fahrzeuge anschließbar ist;
- einem Steuerraum (22) mit einem Transaktionsterminal (24), der einbezieht:
. eine zentrale Steuereinheit (30), mit der steuerbar ist:
◆ einerseits die Interaktion zwischen einer Vorausbezahlungseinrichtung (27) und den möglichen Benutzern der Anschlußklemmen, wobei die Vorausbezahlungseinrichtung (27) ein Bankkartenlesegerät umfaßt, das mit einem Modem in Verbindung steht, das seinerseits mit dem Handwahl-Fernsprechnetz (45) oder dem integrierten digitalen Fernmeldenetz verbunden ist, um die Verbindung mit der Ferneinzugsstelle der betreffenden Bank zu gewährleisten,
◆ und andererseits für eine bestimmte Dauer das Zapfen der Elektrizität aus dem elektrischen Versorgungsnetz (31) im Bereich jeder der Anschlußklemmen (1-10) über den Weg von Schaltern (37), die in dem Raum (22) integriert sind, derart, daß die Verbindung einer oder mehrerer Zapfanschlußklemmen (1-10) mit dem elektrischen Versorgungsnetz zum Unterspannungsetzen der- oder der mehreren selben nach dem wirksamen Bezahlungsvorgang innerhalb des Raumes (22) bewirkt wird,
. einer Tastatur (28), die mit der zentralen Steuereinheit (30) verbunden ist, die dazu vorgesehen ist, dem Benutzer die Eingabe der Daten bezüglich des Vorganges der Elektrizitätsbereitstellung und wechselseitig bezüglich der Bezahlung für diese Leistung zu ermöglichen;
. einem Bildschirm (27), der mit der zentralen Steuereinheit (30) verbunden und für die sichtbare Darstellung der Interaktion zwischen dem Benutzer und der zentralen Einheit vorgesehen ist.

## Claims

1. Self-contained device for self-service delivery of electrical energy, comprising :
- a plurality of terminals (1-10), to which any appliance consuming or receiving electridty can be connected up ;
- a central management unit (30), independent of said terminals (1-10), integrated within a management booth (22), said central unit (30) being capable of managing :
. on the one hand, the interaction between a pre-payment instrument (27) and the potential users of said terminals,
. and on the other hand, the distribution of electricity at each of the terminals (1-10) from the electrical supply grid (31) for a determined duration by means of contactors (37) integrated within said booth (22), in such a way that the connecting of one or more terminals to the electrical supply grid in order to power up it or them be effective after an actual payment operation.

2. Device according to claim 1, characterized in that the pre-payment instrument (27) is combined with a keyboard (28) and with a screen (26) within a transaction interface point (24), also connected to the central management unit (30), and intended to allow the user to select the supply time, and correspondingly to display the interactive dialog with the management unit.

3. Device according to either of claims 1 and 2, characterized in that the pre-payment instrument (27) consists of a bank card reader, combined with a modem, itself connected to the switched telephone network (45) or digital service interrogation network to make the connection with the electronic funds transfer center of the bank in question.

4. Device according to either of claims 1 and 2, characterized in that the pre-payment instrument (27) consists of a reader for payment cards, of the magnetic card or smart card type, whose value is decremented on each operation, by means of the central management unit (30), as a function of the required electricity supply time.

5. Device according to either of claims 1 and 2, characterized in that the prepayment instrument (27) consists of a slot paying machine combined with a banknote reader, which, in conjunction with the management unit (30), analyzes and measures the actual quantity of the sum deposited before delivering the electricity.

6. Device according to one of claims 1 to 5, characterized in that it furthermore comprises a lockable cabinet (23), at which the electrical supply grid (31) terminates, and from which the various connections to the terminals (1-10) leave, the said cabinet (23) comprising, for each of the links to the terminals, a contactor (37), whose activation is managed by the central management unit (30), and a circuit breaker (38).

7. Device according to claim 6, characterized in that the door for closing the cabinet (23) is locked when electricity is not delivered to any of the terminals (1-10), and is unlocked under the control of the management unit (30), following a transaction, it being relocked by the management unit (30) at the end of the transaction.

8. Device according to one of claims 1 to 5, characterized in that each terminal (1-10) is provided with its own independent cabinet, the latter in addition incorporating an independent contactor, whose closing and opening are under the control of the management unit (30), and in addition its own circuit breaker.

9. Self-contained device for self-service delivery of electrical energy for haulage units, in particular for refrigerated trucks in laybys or rest areas, comprising :
- a plurality of terminals (1-10), to which the refrigeration unit (44) of said trucks can be connected up;
- a management booth (22) comprising a transaction interface point (24) incorporating:
. a central management unit (30), capable of managing :
* on the one hand, the interaction between a pre-payment instrument (27) and the potential users of said terminals, said pre-payment instrument (27) consisting of a bank card reader combined with a modem, itself connected to the switched telephone network (45) or integrated services digital network in order to make the connection with the electronic funds transfer center of the bank in question,
■ on the other hand, the distribution of electricity at each of the terminals (1-10) from the electrical supply grid (31) for a determined duration by means of contactors (37) integrated within said booth (22), in order that the connection of one or more of the terminals to the grid in order to power up it or them be effective within said booth (22) after an actual payment operation ;
. a keyboard (28) connected to the central management unit (30), intended to allow the user to input data relating to the operation of supplying electricity and correspondingly relating to the payment for this service;
. a screen (27), connected to the central management unit (30), and intended to allow display of the interaction between the user and said central unit.
